# EUROPEAN PATENT SPECIFICATION

(11) **EP 2 953 879 B1**
(45) Date of publication and mention of the grant of the patent: **23.05.2018**
(21) Application number: 13874714.2
(22) Date of filing: 05.02.2013
(51) Int. Cl.: B66B 1/46

(54) **PERIPHERAL EQUIPMENT NEAR FIELD COMMUNICATION (NFC) CARD READER**
KARTENLESER FÜR NAHFELDKOMMUNIKATION MIT EINER PERIPHERIEVORRICHTUNG
LECTEUR DE CARTE DE COMMUNICATION EN CHAMP PROCHE (NFC) D'ÉQUIPEMENT PÉRIPHÉRIQUE

(43) Date of publication of application: 16.12.2015
(73) Proprietor: Otis Elevator Company, Farmington CT 06032 (US)
(72) Inventor: TANG, Xiaobin, Vincent, Tianjin (CN)
(74) Representative: Ramsay, Laura Anne
(86) International application number: PCT/CN2013/071389
(87) International publication number: WO 2014/121437

(56) References cited:
- CN-A- 1 946 624
- CN-A- 101 910 042
- CN-A- 102 112 388
- CN-A- 102 686 497
- FI-B- 123 252
- US-A1- 2012 031 711

## Description

### BACKGROUND

In a given elevator system or environment, a user may take a number of actions to select a floor or destination to go to. For example, a user may wave or place a card in front of a card reader located in an elevator car while pressing a button that selects a particular floor of a building. The card may be used to condition access to the elevator or to the floor to authorized users, thereby enhancing security. The above conditions require the user to engage in at least two activities: (1) present a card to a card reader, and (2) select a floor using, e.g., numbered buttons.

Elevator users may break access cards, and access cards may be lost. Furthermore, an access card needs to be enabled, programmed, or encoded for the user, which may imply that an administrator or operator of the elevator system needs to have a card writer available in order to provide access to particular floors to authorized users. Visitors to a building associated with the elevator system typically might not have a card, and may have to stop at a desk located in a lobby in order to explain to, e.g., a doorman or security guard the reason for their visit.

US 2012/0031711 discloses a method for determining a destination call for a user carrying a mobile communication means such as a mobile telephone or a contactlessly readable RFID card.

### BRIEF SUMMARY

According to the present invention there is provided a method as defined by claim 1 and an elevator system as defined by claim 8.

Various embodiments are described below.

### BRIEF DESCRIPTION OF THE DRAWINGS

The present disclosure is illustrated by way of example and not limited in the accompanying figures in which like reference numerals indicate similar elements.
FIG. 1 illustrates an exemplary elevator system in accordance with one or more embodiments of the disclosure;
FIG. 2 illustrates an exemplary system for making a call in accordance with one or more embodiments of the disclosure;
FIG. 3 illustrates an exemplary system for providing authorization accordance with one or more embodiments of the disclosure;
FIG. 4 illustrates an exemplary system for directing an elevator user to an elevator in accordance with one or more embodiments of the disclosure; and
FIG. 5 illustrates a flow chart of an exemplary method in accordance with one or more embodiments of the disclosure.

### DETAILED DESCRIPTION

It is noted that various connections are set forth between elements in the following description and in the drawings (the contents of which are included in this disclosure by way of reference). It is noted that these connections in general and, unless specified otherwise, may be direct or indirect and that this specification is not intended to be limiting in this respect. In this respect, a coupling between entities may refer to either a direct or an indirect connection.

Exemplary embodiments of apparatuses, systems and methods are described for providing access to one or more floors or destinations in an elevator environment. In some embodiments, a device may be used to gain access to a given floor. The device may include a mobile device, such as a mobile phone (e.g., a smartphone). The device may be configured for near field communication (NFC), such that a command or request may be issued by the mobile device. The device may receive confirmation or acknowledgment regarding one or more commands or requests.

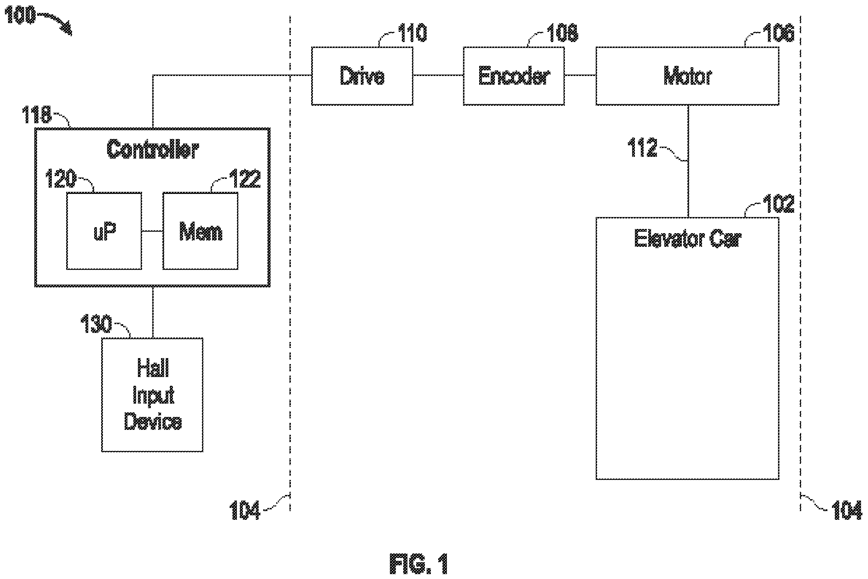

FIG. 1 illustrates a block diagram of an exemplary elevator system 100 in accordance with one or more embodiments. The organization and arrangement of the various components and devices shown and described below in connection with the elevator system 100 is illustrative. In some embodiments, the components or devices may be arranged in a manner or sequence that is different from what is shown in FIG. 1. In some embodiments, one or more of the devices or components may be optional. In some embodiments, one or more additional components or devices not shown may be included.

The system 100 may include an elevator car 102 that may be used to convey, e.g., people or items up or down an elevator shaft or hoist-way 104.

The elevator car 102 may be coupled to a motor 106. The motor 106 may provide power to the system 100. In some embodiments, the motor 106 may be used to propel or move the elevator car 102.

The motor 106 may be coupled to an encoder 108. The encoder 108 may be configured to provide a position of a machine or motor 106 as it rotates. The encoder 108 may be configured to provide a speed of the motor 108. For example, delta positioning techniques, potentially as a function of time, may be used to obtain the speed of the motor 108. Measurements or data the encoder 108 obtains from the motor 106 may be used to infer or determine a position of the elevator car 102.

The system 100 may include a drive 110. The drive 110 may be configured to control the speed of the elevator car 102 by controlling a speed of one or more sheaves (not shown in FIG. 1). The drive 110 may be coupled to the elevator car 102 by one or more tension members 112.

The elevator car 102 may include, or be associated with, a controller 118. In some embodiments, the controller 118 may include at least one processor 120, and memory 122 having instructions stored thereon that, when executed by the at least one processor 120, cause the controller 118 to perform one or more acts, such as those described herein. In some embodiments, the processor 120 may be at least partially implemented as a microprocessor (uP). In some embodiments, the memory 122 may be configured to store data. Such data may include data associated with the elevator car 102, selected destinations for the elevator car 102, etc.

In some embodiments, the elevator system 100 may include an input/output (I/O) interface that may be used by users or riders of the system 100 to gain access to the elevator 100 or the elevator car 102. As an example, the system 100 is shown in FIG. 1 as including a hall input device 130 that may serve as an interface for one or more users of the system 100. The hall input device 130 may be located in one or more locations, such as in a lobby or hallway located outside of the hoist-way 104. The hall input device 130 could be located in another location in some embodiments. The hall input device 130 may be coupled to the controller 118. The controller 118 may process one or more inputs received at the hall input device 130. The controller 118 may provide one or more commands to the hall input device 130, potentially based on the processing of the inputs received at the hall input device 130.

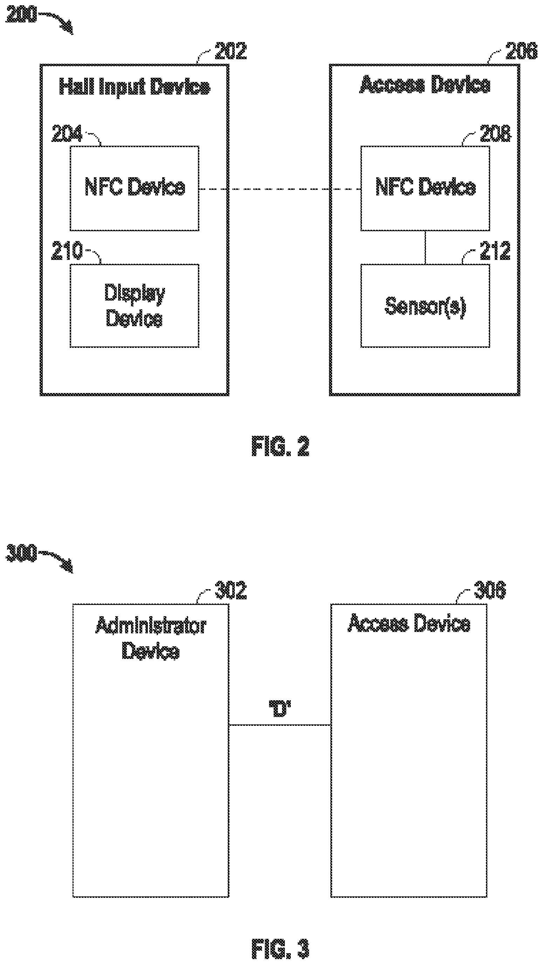

Turning now to FIG. 2, an exemplary system 200 for making a call in accordance with one or more embodiments is shown. In particular, the system 200 is shown as including a hall input device 202. The hall input device 202 may correspond to the hall input device 130 of FIG. 1. The hall input device 202 is shown as including an NFC device 204. The NFC device 204 may be implemented as one or more circuits or "chips." A user of an elevator system (e.g., the elevator system 100 of FIG. 1) may gain access to the elevator system (or an elevator car associated therewith) via an access device 206. The access device 206 may include an NFC device 208. In this manner, when the access device contacts the hall input device 202, or when the NFC device 208 is proximate to the NFC device 204 within a threshold, a determination may be made whether a user associated with the access device 206 should be provided access to the elevator system or a particular floor or destination.

In some embodiments, the access device 206 may be implemented as a mobile device. For example, the access device 206 may correspond to a mobile phone or any other device that users might frequently have in their possession. Any peripheral equipment that supports NFC may be used, such as a smartphone, an iPAD® and a tablet computer. In this manner, users might not be obligated or required to carry with them a device or card specifically dedicated to use of the elevator system. In other words, users may leverage other devices already in their possession to access an elevator. Those other devices may provide for additional functionality that may be unrelated to elevator use.

An identification of a user associated with the access device 206 is obtained by the hall input device 202. For example, if the access device 206 is a mobile device, then an international mobile station equipment identity (IMEI) or phone number is acquired by the hall input device 202 via the NFC devices 204 and 208. The IMEI or phone number may be used as an index into a table to identify a particular user or access rights associated with that user.

In some embodiments, the hall input device 202 may include an output device, such as a display device 210. The display device 210 may provide information or status regarding an elevator or an elevator car, such as a current floor or landing of the elevator car, a direction of travel for the elevator car (e.g., whether the elevator is generally moving up or down a hoist-way, potentially via an arrow symbol), and/or whether the elevator car is currently moving or is stationary.

In some embodiments, a movement or motion of the access device 206 may indicate a requested direction of travel for a user in an elevator system. For example, if a user generally moves the access device 206 towards the ground, that may serve to indicate a request by the user to descend or go to a lower floor. Similarly, if the user moves the access device 206 away from the ground, such movement may serve to indicate that the user desires to ascend or go to a higher floor. Detected movements of the access device 206 may be compared to one or more thresholds in order to differentiate intended requests for service from one another or from unrelated movements of the access device 206. The movement or motion of the access device 206 may be captured as data by one or more sensors 212. The sensor data may be conveyed by the access device 206 to the hall input device 202 via the NFC devices 208 and 204. The request may be confirmed by the hall input device 202. For example, in response to receiving a request to travel in the elevator from the access device 206, the hall input device 202 may transmit a command or instruction to the access device 206 to, e.g., vibrate, to play an audible message, to display a graphic or message, etc. In this manner, the user can obtain confirmation that the elevator system recognized and received the request.

In some embodiments, a car call box may be used. For example, a person may use a mobile device to input a destination floor and then press on the car call box. Through NFC communication, an elevator may identify the destination floor and take the person to the destination floor. In some embodiments, the car call box may correspond to a car operating panel (COP) located inside a car and used for entering a destination floor. In some embodiments, a destination may be entered through a hall input device and confirmed at the COP. In some embodiments, a call (e.g., an up/down call) may be entered at the hall input device and the destination may be entered through a separate device (e.g., a separate NFC device) located in the car.

Turning now to FIG. 3, an exemplary system 300 for providing authorization is shown. The system 300 includes an administrator device 302 and an access device 306. In some embodiments, the access device 306 may correspond to the access device 206 of FIG. 2. The administrator device 302 may be associated with an operator or administrator of an elevator system (e.g., the elevator system 100 of FIG. 1). When the administrator wants to provide access to the elevator system to a user associated with the access device 306, the administrator may cause the administrator device 302 to be brought in proximity to the access device 306, such that a distance 'D' between the administrator device 302 and the access device 306 is less than a threshold. In some embodiments, the threshold may be selected such that the administrator device 302 physically touches or contacts the access device 306 for access to be granted to the user. The administrator device 302 may transfer an access key to the access device 306, which may enable a user of the access device 306 to gain access to an elevator system. The system 300 may be used to provide access to a visitor of a building associated with the elevator system.

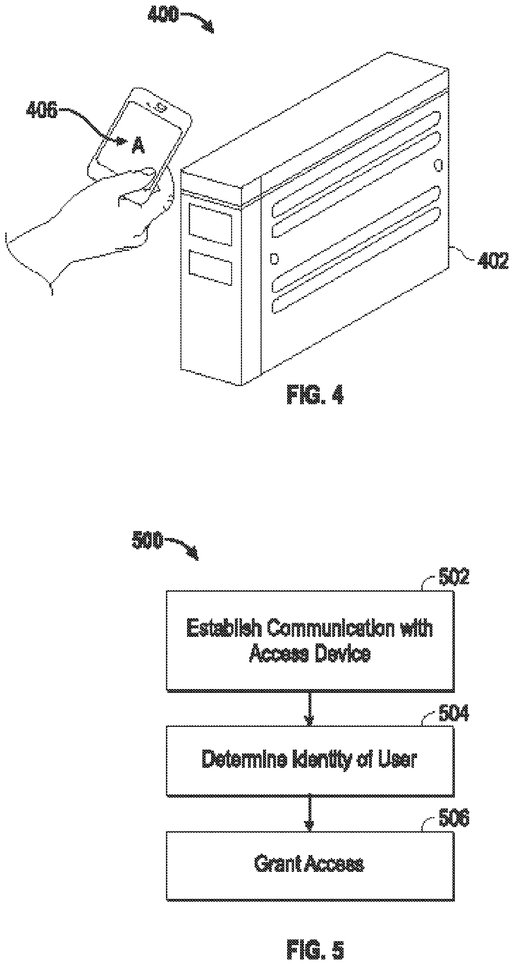

Turning now to FIG. 4, an exemplary system 400 for directing an elevator user to an elevator is shown. The system 400 may be used in embodiments where more than one elevator or elevator car are present. For example, the system 400 may be used in connection with an office building that has an elevator system that includes multiple elevator cars.

The system 400 includes a security access point 402. The security access point 402 may take one or more forms, such as a turn-style, a swinging-gate, or the like. An elevator system (not shown in FIG. 4) may be located in an area that is beyond the security access point 402, such that only authorized users may obtain access to the elevator.

The system 400 includes an access device 406. In some embodiments, the access device 406 may correspond to the access device 206 of FIG. 2 and/or the access device 306 of FIG. 3. The access device 406 may communicate with the security access point 402 using, e.g., near field communication (NFC), in order to validate or authorize a user associated with the access device 406. Upon validation, the user may gain access to the elevator.

In some embodiments, a user of the access device 406 may provide one or more inputs to the access device 406. For example, the user may select a floor or destination that the user would like to go to using the elevator system. Alternatively, a floor or destination may be selected for the user based on the identity of the user, historical trends or uses, etc. The access device 406 may direct the user to a particular elevator car associated with the elevator system. The particular elevator car may be selected by a device (e.g., controller 118 of FIG. 1). The selection may be based on one or more factors or conditions, such as an identification of other users desiring to use the elevator system, user waiting time, loads with respect to the elevator system or respective elevator cars, the time of day or the day of the week, etc. The selection may serve to minimize the number of floors that need to be traversed by an elevator car, which may help to conserve power.

In some embodiments, the elevator car selected for a user may be indicated by the access device 406. For example, the access device 406 may play an auditory message that may direct the user to a particular elevator car. In the embodiment shown in FIG. 4, the message "A" is displayed on the access device 406, which may indicate to the user that the user should go to elevator car identified by the letter A. When the selected elevator car arrives at the floor that the user is currently located at, the access device 406 may provide an indication as such. For example, when elevator A car arrives, the access device may vibrate, play an audio message, display a graphic, etc., that may serve to indicate the arrival. Alternatively or in addition the car assignment may be displayed on display device 210.

Turning now to FIG. 5, a flow chart of an exemplary method 500 is shown. The method 500 may be used to grant access to a potential user of an elevator system. The method 500 may be executed by one or more devices or components, such as those described herein.

In block 502, communication with an access device may be established. For example, the communication may be based on NFC. The communication may be established in response to a user moving the access device in one or more directions. For example, movement of the access device in a particular direction may indicate a desired direction of travel in the elevator system.

In block 504, an identity of a user associated with the access device of block 502 may be determined.

In block 506, the identified user of block 504 may be granted access to the elevator system. The grant may include one or more restrictions, potentially based on the identity of the user (e.g., block 504). For example, the grant may restrict the user to a particular elevator car, to one or more particular floors or destinations, to a particular direction of travel (e.g., up or down), etc. In some embodiments, additional restrictions may be imposed. For example, during a fire a user that might otherwise have unlimited access to the elevator system may be precluded from using the elevator in order to force the user to use a stairwell.

The method 500 is illustrative. In some embodiments, one or more of the blocks or operations (or portions thereof) may be optional. In some embodiments, the operations may execute in an order or sequence different from what is shown. In some embodiments, one or more additional operations not shown may be included.

In some embodiments, one or more filtering techniques may be applied to provide greater accuracy with respect to an intended destination. For example, in some embodiments a log of a user's destinations within an elevator system may be consulted or examined to resolve an unclear or ambiguous input. For example, if the user usually arrives at a building associated with the elevator system in the morning and leaves the building in the evening, any ambiguity associated with a requested direction of travel may be resolved in accordance with historical patterns or trends.

In some embodiments, a user may be able to cancel a call or travel itinerary with respect to an elevator. For example, if a user changes her mind and decides that she does not want to use the elevator after having requested elevator service, the user may move or shake her device in a particular manner (e.g., in a particular direction) to cancel the requested elevator service. Cancellation may be desirable: (1) where, e.g., the user (or a person or entity affiliated with the user) of the elevator system is charged based on use, (2) to reduce power utilization, (3) to minimize elevator component wear-and-tear, (4) etc.

In some embodiments, a mobile access device is provided. The access device may include a mobile near field communication (NFC) card reader. The access device may enhance security by eliminating the use of traditional security or access cards that may be lost or damaged. Hall input device design may be simplified, as buttons for selecting a particular floor or destination may be eliminated. Processing of visitors to a building associated with an elevator system may be streamlined or simplified. Users may be directed to particular elevator cars in an elevator system, which may help to save power and reduce waiting time.

Embodiments may be tied to one or more particular machines. For example, a hall input device, an administrator device, and/or a controller may communicate with an access device, potentially based on NFC, in order to provide or grant access to an elevator system. The access that is granted may be a function of an identification of a user associated with the access device.

In some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments may be implemented using one or more technologies. In some embodiments, an apparatus or system may include one or more processors, and memory storing instructions that, when executed by the one or more processors, cause the apparatus or system to perform one or more methodological acts as described herein. In some embodiments, one or more input/output (I/O) interfaces may be coupled to one or more processors and may be used to provide a user with an interface to an elevator system. Various mechanical components known to those of skill in the art may be used in some embodiments.

Embodiments may be implemented as one or more apparatuses, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein.

Aspects of the disclosure have been described in terms of illustrative embodiments thereof. Numerous other embodiments, modifications and variations within the scope and spirit of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional.

## Claims

1. A method comprising:
establishing, by a hall input device (130; 202) associated with an elevator system (100), communication with a peripheral equipment (206);
**characterised by** receiving, by the hall input device (130; 202), sensor data from the peripheral equipment (206) indicating a requested direction of travel in the elevator system (100) based on the establishment of the communication;
acquiring, by the hall input device (130; 202), at least one of an international mobile station equipment identity (IMEI) and a phone number from the peripheral equipment (206) based on establishing the communication with the peripheral equipment (206);
determining an identity of a user associated with the peripheral equipment (206) based on the at least one of an international mobile station equipment identity (IMEI) and a phone number; and
granting access to an elevator car (102) of the elevator system (100) in the requested direction of travel based on the receipt of the sensor data, wherein the granting of access to the elevator car (102) is based on the determined identity of the user.

2. The method of claim 1, further comprising:
transmitting a command to the peripheral equipment (206) based on the establishment of the communication that confirms the communication;
wherein optionally the command directs the peripheral equipment (206) to perform at least one of: vibrate, play an audible message, display a graphic, and display a message.

3. The method of any preceding claim, wherein the communication is established using near field communication.

4. The method of any preceding claim, further comprising:
receiving, by the hall input device (130; 202), an access key from the peripheral equipment (206; 306), wherein the peripheral equipment (206; 306) received the access key from an administrator device (302),
wherein the granting of access to the elevator car (102) is based on the receipt of the access key by the hall input device (130; 202).

5. The method of any preceding claim, wherein a movement of the peripheral equipment (206) in a first direction in an amount greater than a first threshold indicates that the requested direction of travel is up, and wherein a movement of the peripheral equipment (206) in a second direction in an amount greater than a second threshold indicates that the requested direction of travel is down.

6. The method of any preceding claim, further comprising:
receiving, by the hall input device (130; 202), second sensor data from the peripheral equipment (206) indicating a request to cancel use of the elevator; and
canceling the use of the elevator based on the second sensor data.

7. The method of any preceding claim, further comprising:
receiving, by the hall input device (130; 202), a selection of a destination floor from the peripheral equipment (206); and
selecting the elevator car (102) based on the received selection of the destination floor; and optionally:
transmitting, by the hall input device (130; 202), an identification of the elevator car (102) to the peripheral equipment (206).

8. An elevator system comprising:
a hall input device (130; 202) configured to establish a near field communication with a peripheral equipment (206) to receive:
motion sensor data from the peripheral equipment (206) that indicates a requested direction of travel in the elevator system (100), and
identification data from the peripheral equipment (206) that identifies a user associated with the peripheral equipment (206) based on at least one of an international mobile station equipment identity (IMEI) and a phone number; and
a controller (118) comprising a processor, wherein the controller (118) is configured to receive the sensor data and the identification data from the hall input device (130; 202) and provide conditional access to an elevator car (102) based on the identification data.

9. The elevator system of claim 8, wherein the motion sensor data indicates that the peripheral equipment (206) is moved in a first direction in an amount greater than a first threshold when the requested direction corresponds to an ascension in the elevator system, and wherein the motion sensor data indicates that the peripheral equipment (206) is moved in a second direction in an amount greater than a second threshold when the request direction corresponds to a descension in the elevator system, and wherein the first and second thresholds are different.

10. The elevator system of claim 8 or 9, wherein:
the peripheral equipment (206) comprises a mobile phone, and wherein the controller (118) is configured to cause the hall input device (130; 202) to transmit a command to the mobile phone when access to the elevator car (102) is granted by the controller (118), and wherein the command directs the mobile phone to display an indication of the elevator car (102), and wherein the command directs the mobile phone to vibrate; or
the peripheral equipment (206) comprises at least one of a smartphone and a tablet computer, and wherein the controller (118) is configured to cause the hall input device (130; 202) to transmit a command to the at least one of a smartphone, an IPAD, and a tablet computer when access to the elevator car (102) is granted by the controller (118), and wherein the command directs the at least one of a smartphone and a tablet computer to display an indication of the elevator car (102).

## Patentansprüche

1. Verfahren, umfassend:
Herstellen einer Verbindung mit einer Peripherievorrichtung (206) durch eine einem Aufzugsystem (100) zugeordnete Halleneingabevorrichtung (130; 202);
**gekennzeichnet durch** Empfangen von Sensordaten von der Peripherievorrichtung (206), die eine angeforderte Fahrtrichtung im Aufzugsystem (100) angeben, durch die Halleneingabe-vorrichtung (130; 202) auf Grundlage der Herstellung der Verbindung;
Abrufen von mindestens einem einer internationalen Mobilstationsvorrichtungskennung (International Mobile Station Equipment Identity - IMEI) und einer Telefonnummer aus der Peripherievorrichtung (206) auf Grundlage der Herstellung der Verbindung mit der Peripherievorrichtung (206) durch die Halleneingabevorrichtung (130; 202);
Bestimmen der Identität eines der Peripherievorrichtung (206) zugeordneten Benutzers auf Grundlage von mindestens einem einer internationalen Mobilstationsvorrichtungskennung (IMEI) und einer Telefonnummer; und
Gewähren von Zugang zu einer Aufzugskabine (102) des Aufzugsystems (100) in der angeforderten Fahrtrichtung auf Grundlage des Empfangs der Sensordaten, wobei das Gewähren des Zugangs zur Aufzugskabine (102) auf der bestimmten Benutzeridentität beruht.

2. Verfahren nach Anspruch 1, ferner umfassend:
Senden eines Befehls an die Peripherievorrichtung (206), der die Verbindung bestätigt, auf Grundlage der Herstellung der Verbindung;
wobei optional der Befehl die Peripherievorrichtung (206) anweist, mindestens eines des Folgenden durchzuführen: Vibrieren, Abspielen einer hörbaren Nachricht, Anzeigen einer Grafik und Anzeigen einer Nachricht.

3. Verfahren nach einem der vorhergehenden Ansprüche, wobei die Verbindung unter Verwendung von Nahfeldkommunikation hergestellt wird.

4. Verfahren nach einem der vorhergehenden Ansprüche, ferner umfassend:
Empfangen eines Zugangsschlüssels von der Peripherievorrichtung (206; 306) durch die Halleneingabevorrichtung (130; 202), wobei die Peripherievorrichtung (206; 306) den Zugangsschlüssel von einer Administratorvorrichtung (302) empfing,
wobei das Gewähren von Zugang zur Aufzugskabine (102) auf dem Empfang des Zugangsschlüssels durch die Halleneingabe-vorrichtung (130; 202) beruht.

5. Verfahren nach einem der vorhergehenden Ansprüche, wobei eine Bewegung der Peripherievorrichtung (206) in eine erste Richtung um mehr als einen ersten Schwellenwertbetrag angibt, dass die angeforderte Fahrtrichtung nach oben ist, und wobei eine Bewegung der Peripherievorrichtung (206) in eine zweite Richtung um mehr als einen zweiten Schwellenwertbetrag angibt, dass die angeforderte Fahrtrichtung nach unten ist.

6. Verfahren nach einem der vorhergehenden Ansprüche, ferner umfassend:
Empfangen zweiter Sensordaten von der Peripherievorrichtung (206), die eine Anforderung zum Stornieren der Verwendung des Aufzugs angeben, durch die Halleneingabevorrichtung (130; 202); und
Stornieren der Verwendung des Aufzugs auf Grundlage der zweiten Sensordaten.

7. Verfahren nach einem der vorhergehenden Ansprüche, ferner umfassend:
Empfangen einer Auswahl einer Zieletage von der Peripherievorrichtung (206) durch die Halleneingabevorrichtung (130; 202); und
Auswählen der Aufzugskabine (102) auf Grundlage der empfangenen Auswahl der Zieletage; und optional:
Senden einer Kennung der Aufzugskabine (102) an die Peripherievorrichtung (206) durch die Halleneingabevorrichtung (130; 202).

8. Aufzugsystem, umfassend:
eine Halleneingabevorrichtung (130; 202), die dazu konfiguriert ist, eine Nahfeldkommunikation mit einer Peripherievorrichtung (206) herzustellen, um Folgendes zu empfangen:
Bewegungssensordaten von der Peripherievorrichtung (206), die eine angeforderte Fahrtrichtung im Aufzugsystem (100) angeben, und
Kennungsdaten von der Peripherievorrichtung (206), die auf Grundlage von mindestens einem einer internationalen Mobilstationsvorrichtungskennung (IMEI) und einer Telefonnummer einen der Peripherievorrichtung (206) zugeordneten Benutzer kennzeichnen; und
eine Steuerung (118), die einen Prozessor umfasst, wobei die Steuerung (118) dazu konfiguriert ist, die Sensordaten und die Kennungsdaten von der Halleneingabevorrichtung (130; 202) zu empfangen und auf Grundlage der Kennungsdaten bedingten Zugang zu einer Aufzugskabine (102) bereitzustellen.

9. Aufzugsystem nach Anspruch 8, wobei die Bewegungssensordaten angeben, dass die Peripherievorrichtung (206) um mehr als einen ersten Schwellenwertbetrag in eine erste Richtung bewegt wird, wenn die angeforderte Richtung einer Fahrt nach oben im Aufzugsystem entspricht, und wobei die Bewegungssensordaten angeben, dass die Peripherievorrichtung (206) um mehr als einen zweiten Schwellenwertwertbetrag in eine zweite Richtung bewegt wird, wenn die angeforderte Richtung einer Fahrt nach unten im Aufzugsystem entspricht, und wobei sich der erste und der zweite Schwellenwert voneinander unterscheiden.

10. Aufzugsystem nach Anspruch 8 oder 9, wobei:
die Peripherievorrichtung (206) ein Mobiltelefon umfasst und wobei die Steuerung (118) dazu konfiguriert ist, die Halleneingabevorrichtung (130; 202) dazu zu veranlassen, einen Befehl an das Mobiltelefon zu senden, wenn durch die Steuerung (118) Zugang zur Aufzugskabine (102) gewährt wird, und wobei der Befehl das Mobiltelefon anweist, eine Angabe der Aufzugskabine (102) anzuzeigen, und wobei der Befehl das Mobiltelefon anweist, zu vibrieren; oder
die Peripherievorrichtung (206) mindestens eines von einem Smartphone und einem Tablet-Computer umfasst und wobei die Steuerung (118) dazu konfiguriert ist, die Halleneingabe-vorrichtung (130; 202) dazu zu veranlassen, einen Befehl an mindestens eines von einem Smartphone, einem IPAD und einem Tablet-Computer zu senden, wenn durch die Steuerung (118) Zugang zur Aufzugskabine (102) gewährt wird, und wobei der Befehl das mindestens eine von einem Smartphone und einem Tablet-Computer anweist, eine Angabe der Aufzugskabine (102) anzuzeigen.

## Revendications

1. Procédé comprenant :
l'établissement, par un dispositif d'entrée de hall (130; 202) associé à un système d'ascenseur (100), d'une communication avec un équipement périphérique (206) ;
**caractérisé par** la réception, par le dispositif d'entrée de hall (130; 202), de données de capteur provenant de l'équipement périphérique (206), indiquant une direction de parcours souhaitée dans le système d'ascenseur (100) sur la base de l'établissement de la communication ;
l'acquisition, par le dispositif d'entrée de hall (130; 202), d'au moins un d'une identité internationale d'équipement de station mobile (IMEI) et d'un numéro de téléphone provenant de l'équipement périphérique (206) sur la base de l'établissement de la communication avec l'équipement périphérique (206) ;
la détermination d'une identité d'un utilisateur associé à l' équipement périphérique (206) sur la base de l'au moins un d'une identité internationale d'équipement de station mobile (IMEI) et d'un numéro de téléphone ; et
l'obtention de l'accès à une cabine d'ascenseur (102) du système d'ascenseur (100) dans la direction de parcours souhaitée sur la base de la réception des données de capteur, l'obtention de l'accès à la cabine d'ascenseur (102)étant basée sur l'identité déterminée de l'utilisateur.

2. Procédé selon la revendication 1, comprenant en outre :
la transmission d'une commande à l'équipement périphérique (206) sur la base de l'établissement de la communication qui confirme la communication ;
la commande amenant en option l'équipement périphérique (206) à réaliser au moins une action parmi les suivantes : vibrer, lire un message audio, afficher une image et afficher un message.

3. Procédé selon une quelconque revendication précédente, dans lequel la communication est établie à l'aide d'une communication en champ proche.

4. Procédé selon une quelconque revendication précédente, comprenant en outre :
la réception, par le dispositif d'entrée de hall (130; 202), d'une clé d'accès provenant de l'équipement périphérique (206; 306), l'équipement périphérique (206; 306) ayant reçu la clé d'accès d'un dispositif administrateur (302),
l'obtention de l'accès à la cabine d'ascenseur (102) étant basée sur la réception de la clé d'accès par le dispositif d'entrée de hall (130; 202).

5. Procédé selon une quelconque revendication précédente, dans lequel un mouvement de l'équipement périphérique (206) dans une première direction sur une distance supérieure à un premier seuil indique que la direction de parcours souhaitée est vers le haut, et dans lequel un mouvement de l'équipement périphérique (206) dans une seconde direction sur une distance supérieure à un second seuil indique que la direction de parcours souhaitée est vers le bas.

6. Procédé selon une quelconque revendication précédente, comprenant en outre :
la réception, par le dispositif d'entrée de hall (130; 202), de secondes données de capteur provenant de l'équipement périphérique (206) indiquant une demande d'annulation de l'utilisation de l'ascenseur ; et
l'annulation de l'utilisation de l'ascenseur sur la base des secondes données de capteur.

7. Procédé selon une quelconque revendication précédente, comprenant en outre :
la réception, par le dispositif d'entrée de hall (130; 202), d'une sélection d'un étage de destination provenant de l'équipement périphérique (206) ; et
la sélection de la cabine d'ascenseur (102) sur la base de la sélection reçue de l'étage de destination ; et en option :
la transmission, par le dispositif d'entrée de hall (130; 202), d'un identifiant de la cabine d'ascenseur (102) à l'équipement périphérique (206).

8. Système d'ascenseur comprenant :
un dispositif d'entrée de hall (130; 202) conçu de manière à établir une communication en champ proche avec un équipement périphérique (206) pour recevoir :
des données de capteur de mouvement provenant de l'équipement périphérique (206), qui indiquent une direction de parcours souhaitée dans le système d'ascenseur (100), et
des données d'identification provenant de l'équipement périphérique (206), qui identifient un utilisateur associé à l'équipement périphérique (206) sur la base d'au moins un d'une identité internationale d'équipement de station mobile (IMEI) et d'un numéro de téléphone ; et
un contrôleur (118) comprenant un processeur, le contrôleur (118) étant conçu de manière à recevoir les données de capteur et les données d'identification du dispositif d'entrée de hall (130; 202) et fournir un accès conditionnel à une cabine d'ascenseur (102) sur la base des données d'identification.

9. Système d'ascenseur selon la revendication 8, dans lequel les données de capteur de mouvement indiquent que l'équipement périphérique (206) est déplacé dans une première direction sur une distance supérieure à un premier seuil lorsque la direction souhaitée correspond à une ascension dans le système d'ascenseur, et dans lequel les données de capteur de mouvement indiquent que l'équipement périphérique (206) est déplacé dans une seconde direction sur une distance supérieure à un second seuil lorsque la direction souhaitée correspond à une descente dans le système d'ascenseur, et dans lequel les premier et second seuils sont différents.

10. Système selon la revendication 8 ou 9, dans lequel :
l'équipement périphérique (206) comprend un téléphone mobile, et dans lequel le contrôleur (118) est conçu de manière à amener le dispositif d'entrée de hall (130 ; 202) à transmettre une commande au téléphone mobile lorsque l'accès à la cabine d'ascenseur (102) est accordé par le contrôleur (118), et dans lequel la commande invite le téléphone mobile à afficher une indication de la cabine d'ascenseur (102), et dans lequel la commande invite le téléphone mobile à vibrer ; ou
l'équipement périphérique (206) comprend au moins d'un smartphone et d'un ordinateur tablette, et dans lequel le contrôleur (118) est conçu de manière amener le dispositif d'entrée de hall (130 ; 202) à transmettre une commande à l'au moins un d'un smartphone, d'un IPAD et d'un ordinateur tablette lorsque l'accès à la cabine d'ascenseur (102) est accordé par le contrôleur (118), et dans lequel la commande invite l'au moins un d'un smartphone et d'un ordinateur tablette à afficher une indication de la cabine d'ascenseur (102).
